# EUROPÄISCHE PATENTSCHRIFT

(11) **EP 4 259 460 B1**
(45) Veröffentlichungstag und Bekanntmachung des Hinweises auf die Patenterteilung: **06.08.2025**
(21) Anmeldenummer: 21830939.1
(22) Anmeldetag: 29.11.2021
(51) Int. Cl.: B60C 15/02, B60C 15/024

(54) **NUTZFAHRZEUGREIFEN**
COMMERCIAL VEHICLE TYRE
PNEU DE VÉHICULE UTILITAIRE

(30) Priorität: 11.12.2020 DE 102020215727
(43) Veröffentlichungstag der Anmeldung: 18.10.2023
(73) Patentinhaber: Continental Reifen Deutschland GmbH, 30175 Hannover (DE)
(72) Erfinder: FRIES, Volkmar, 30165 Hannover (DE); MARKOVIC, David, 30165 Hannover (DE)
(74) Vertreter: Continental Corporation
(86) Internationale Anmeldenummer: PCT/DE2021/200212
(87) Internationale Veröffentlichungsnummer: WO 2022/122092

(56) Entgegenhaltungen:
- WO-A1-2017/110643
- CN-A- 111 699 097
- CN-U- 211 592 120

## Beschreibung

Die Erfindung betrifft einen Nutzfahrzeugreifen vorgesehen zur Montage auf einer gemäß E.T.R.T.O. Standards Manual genormten 15°-Tiefbettfelge (Breitencodes 5,25 bis 18,00) mit zwei Felgenhörnern und mit zwei Felgenabschnitten mit je einer Wulstsitzfläche,
wobei der Nutzfahrzeugreifen zwei Wulstbereiche mit Wulstkernen und je einer Wulstzehe und einer reifenaußenseitigen und einer reifeninnenseitigen Wulstkontur aufweist, welche Wulstkonturen an der Wulstzehe aneinander anschließen, wobei jede reifenaußenseitige Wulstkontur ein erstes Segment, welches bei auf der Felge montiertem Nutzfahrzeugreifen mit dem Felgenhorn in Kontakt ist, und einen Außenkonturbereich, welcher bei auf der Felge montiertem Nutzfahrzeugreifen mit der Wulstsitzfläche zumindest teilweise in Kontakt ist, aufweist.

Ein derartiger Nutzfahrzeugreifen ist beispielsweise aus der EP 1 240 033 B1 bekannt. Bei einer in dieser Druckschrift gezeigten Ausführung eines Wulstbereiches für den Nutzfahrzeugreifen ist der reifenaußenseitige Wulstkonturbereich, welcher bei auf der Felge montiertem Nutzfahrzeugreifen mit der Wulstsitzfläche der Felge in Kontakt ist, einheitlich kegelstumpfförmig geformt. An der Wulstzehenspitze treffen die reifeninnenseitige Wulstkontur und die reifenaußenseitige Wulstkontur aufeinander und verlaufen zueinander unter einem Öffnungswinkel von 105° bis 155°. Durch derart gestaltete Wulstzehen soll sichergestellt sein, dass beim Aufziehen des Reifens auf die Felge die Reifenwülste möglichst unversehrt bleiben. Die EP 1 240 033 B1 offenbart ein weiteres Ausführungsbeispiel einer Wulstkontur mit einer stark gerundeten Wulstzehe, um die Montage des Reifens zu erleichtern. Die Herstellung von Nutzfahrzeugreifen mit solchen Wulstkonturen erfordern jedoch sehr speziell gestaltet Vulkanisationsformen.

Die Ausgestaltung der Wulstbereiche beeinflusst weitgehend, inwieweit sich ein Nutzfahrzeugreifen ohne ein Beschädigen der Wulstbereiche montieren lässt und ob zum Aufpumpen zusätzliche Montagehilfsmittel (wie z. B Reifenschockfüller) erforderlich sind. Es ist bekannt, dass bei Nutzfahrzeugreifen eine geringe Wulstzehendeformation mit einer guten Montierbarkeit unter einem Zielkonflikt steht, das heißt, dass gestalterische Maßnahmen, welche die Wulstzehendeformationen verringern, üblicherweise eine Verschlechterung der Montierbarkeit zur Folge haben und umgekehrt. Eine Verformung der Wulstzehen tritt meist erst bei der Nutzung der montierten Nutzfahrzeugreifen auf und kann derart sein, dass die Nutzfahrzeugreifen nicht mehr runderneuert werden können. Die unerwünschte Wulstzehenverformung kann durch die Ausgestaltung der Wulstzehe gering gehalten werden. Eine Reduktion der Wulstzehenverformung über spezielle Wulstkonturen bedingt in der Regel höhere Montagekräfte und bewirkt daher auch ein erhöhtes Risiko von Montageschäden. Nachdem den Wulstzehen auch eine bedeutende Funktion für die Luftdichtheit des Nutzfahrzeugreifens zukommt, ist es üblich, langgestreckt spitze Wulstzehen bei Nutzfahrzeugreifen vorzusehen, welche die Montagefreundlichkeit der Reifen beeinträchtigen. Um Wulstzehenverformungen zu reduzieren und die Montierbarkeit von Nutzfahrzeugreifen auf Felgen zu verbessern, sind auch alternative Lösungen, beispielsweise Felgenbandprotektoren, vorgeschlagen worden. Diese Maßnahmen bedingen zusätzliche Material- und Verarbeitungskosten.

Nutzfahrzeugreifen mit einer Wulstkontur sind offenbart in der WO 2017/110643 A1, der CN 111 699 097 A und der CN 211 592 120 U.

Der Erfindung liegt die Aufgabe zugrunde, bei einem Nutzfahrzeugreifen die Wulstbereiche derart zu gestalten, dass der zwischen der Montagefreundlichkeit und der Wulstzehenverformung bestehende Zielkonflikt möglichst optimal gelöst wird, indem sichergestellt wird, dass der Nutzfahrzeugreifen sich ohne Wulstzehendeformationen komfortabel montieren lässt und luftdicht bliebt. Gelöst wird die gestellte Aufgabe erfindungsgemäß dadurch, dass sich der Außenkonturbereich aus drei aneinander anschließenden Segmenten zusammensetzt, und zwar einem an das erste, mit dem Felgenhorn in Kontakt tretende Segment unter einem Außenwinkel von 190° bis 225° anschließenden zweiten Segment, einem an dieses unter einem Außenwinkel von 165° bis 175° anschließenden dritten Segment und einem an dieses unter einem Außenwinkel von 200° bis 210° anschließenden vierten Segment,
wobei die auf eine unter einem Winkel von 15° zum zweiten Segment verlaufende Bezugsgerade projizierte Gesamtbreite des zweiten, dritten und vierten Segmentes 20,0 mm bis 45, 0 mm beträgt und wobei das vierte Segment in dieser Projektion eine Breite von 20 % bis 35 % der Gesamtbreite aufweist.

Erfindungsgemäß ausgeführte Wulstbereiche weisen einen mit der Wulstsitzfläche der Felge in Kontakt kommenden Außenkonturbereich auf, welcher in drei auf spezielle Weise zueinander gewinkelt verlaufende Segmente gegliedert ist, derart, dass die Montierbarkeit des Reifens deutlich verbessert ist, wobei die Aufpumpbarkeit des Reifens und die Luftdichtheit, insbesondere durch den Verlauf und die Breite des vierten Segmentes, gut erhalten bleiben. Die speziellen Winkelungen zwischen den vier Segmenten verringern eine plastische Verformung der Wulstbereiche des Nutzfahrzeugreifens und gewährleisten daher auch eine geringe Wulstzehenverformung, welche mit einer geringen Wulstflanschverformung der Felge einhergeht. Nutzfahrzeugreifen mit derart gestalteten Wulstbereichen zeichnen sich ferner durch eine hohe Wulsthaltbarkeit aus.

Weitere bevorzugte Maßnahmen tragen dazu bei, die plastische Verformung der Wulstbereiche des Nutzfahrzeugreifens zu verringern und eine geringe Wulstzehenverformung sicherzustellen.

Gemäß einer dieser Maßnahmen weisen das zweite Segment eine Breite von 40 % bis 60 % der Gesamtbreite auf.

Gemäß weiteren diesbezüglich vorteilhaften Maßnahmen sind das das zweite, das dritte und das vierte Segment über den Wulstbereichsumfang betrachtet Kegelstumpfmantelflächen oder Kegelstumpfmantelflächen ähnlich, das erste Segment entweder eine Kegelstumpfmantelfläche oder eine Zylindermantelfläche oder solchen Mantelflächen ähnlich.

In Hinblick auf eine geringe Wulstzehenverformung ist ferner vorteilhaft, wenn die reifeninnenseitige Wulstkontur einen Endabschnitt aufweist, welcher gemeinsam mit dem vierten Segment die Wulstzehe mit einer Zehenspitze definiert, wobei dieser Endabschnitt an der Zehenspitze mit dem vierten Segment einen Winkel einschließt, welcher 80° bis 90° beträgt. Dieser Endabschnitt erstreckt sich bevorzugt im Wesentlichen bis zur Innenkante des Wulstkernes. An den Endabschnitt anschließend verläuft die reifeninnenseitige Wulstkontur bevorzugt derart, dass die Winkel zwischen dem vierten Segment und Tangenten an der reifeninnenseitigen Wulstkontur mit zunehmender Entfernung vom vierten Segment kleiner werden.

Eine weitere Maßnahme, durch welche die bezüglich Wulstzehenverformung besonders heikle Zehenspitze vor unerwünschten Verformungen geschützt wird und eine optimale Luftdichtigkeit des Reifens sichergestellt wird, besteht darin, dass das vierte Segment an der Wulstzehe einen Endabschnitt aufweist, welcher eine Breite von 2,00 mm bis 5,00 mm aufweist und in Richtung zur nicht dargestellten Reifenachse mit einem Radius von 0,50 mm bis 3,00 mm gerundet verläuft.

Verformungen der Wulstbereiche beim Montieren des Nutzfahrzeugreifens werden insbesondere auch dann gering gehalten, wenn die einzelnen Segmente über Übergangsrundungen mit einem Radius von beispielsweise 1,00 mm bis 10,00 mm aneinander anschließen.

Vorzugsweise bestehen die Wulstkerne aus gummierten Stahldrähten, sodass sich die Wulstkerne bei der Montage des Nutzfahrzeugreifens leichter verformen lassen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Wulstbereich eines Nutzfahrzeugreifens im axialen Schnitt bzw. Querschnitt und
Fig. 2 eine zugehörige Schnittansicht eines Abschnittes einer 15°-Tiefbettfelge.

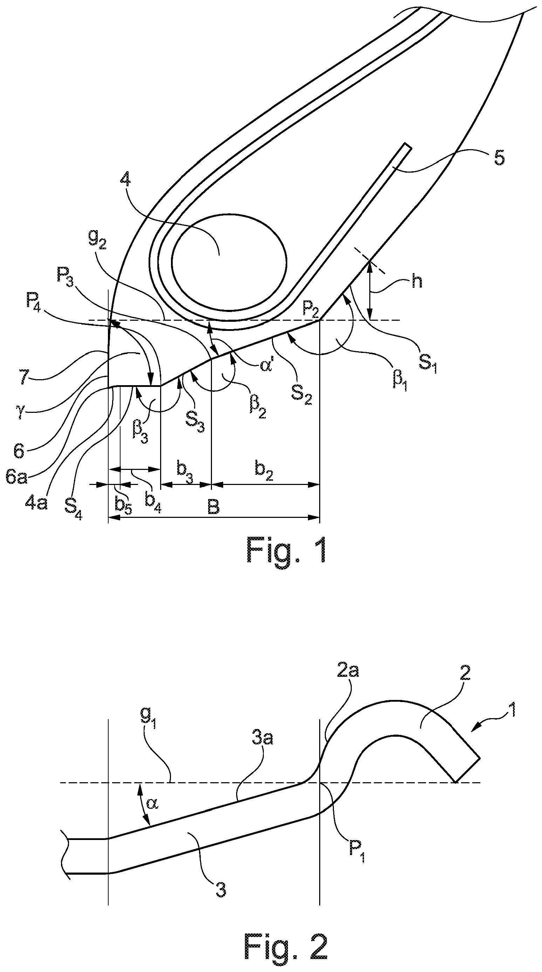

Fig. 1 zeigt im Querschnitt einen Wulstbereich eines Nutzfahrzeugreifens, beispielsweise eines Reifens für Lastkraftwagen oder Busse. Nutzfahrzeugreifen mit gemäß der Erfindung gestalteten Wulstbereichen sind zur Montage auf 15°-Tiefbettfelgen vorgesehen, ausgeführt gemäß European Tyre and Rim Technical Organisation Standards Manual in der jeweils geltenden Fassung, Abschnitte "15° Drop-Center Rims (width codes 5,25 to 18,00) mit nominalen Durchmessern von 17,5 Zoll, 19,5 Zoll, 20,5 Zoll, 22,5 Zoll oder 24,5 Zoll.

Fig. 2 zeigt eine Schnittansicht durch einen randseitigen Abschnitt einer Felge 1, welche eine 15°-Tiefbettfelge, wie erwähnt, ist. Dargestellt sind im Querschnitt ein Felgenhorn 2 mit einer felgeninnenseitigen Sitzfläche 2a und einem unter einem Winkel α von 15° zur nicht gezeigten Felgenachse (Rotationsachse der Felge 1) sowie Richtung Tiefbett geneigten Felgenabschnitt 3 mit einer felgeninnenseitigen und ebenfalls unter einem Winkel α von 15° zur nicht gezeigten Rotationsachse der Felge 1 verlaufenden Wulstsitzfläche 3a. Die Sitzfläche 2a am Felgenhorn 2 und die Wulstsitzfläche 3a schneiden einander entlang eines die Felge 1 umlaufenden Kreises, welcher im gezeigten Querschnitt durch einen Punkt P₁ versinnbildlicht ist. Der Durchmesser dieses Kreises entspricht dem jeweiligen Felgendurchmesser. Der Winkel α ist in Fig. 2 zwischen der Wulstsitzfläche 3a und einer parallel zur nicht gezeigten Felgenachse verlaufenden gestrichelten Bezugsgeraden g₁ durch den Punkt P₁ eingezeichnet.

Fig. 1 zeigt den Wulstbereich, wie er bei einem vulkanisierten Nutzfahrzeugreifen ausgebildet ist, bevor der Nutzfahrzeugreifen auf der Felge 1 montiert wird. Der in Fig. 1 gezeigte Wulstbereich enthält einen schematisch eingezeichneten, im Beispiel runden Wulstkern 4 aus gummierten Stahldrähten und eine den Wulstkern 4 umlaufende ebenfalls lediglich angedeutete Karkassenlage 5. Weitere, den Wulstbereich üblicherweise verstärkende Bauteile, wie Wulstverstärkerlagen, sind nicht dargestellt.

Die reifenaußenseitige Wulstkontur des Wulstbereiches ist in vier flächige, unmittelbar aufeinander folgende Segmente gegliedert, die mit S₁, S₂, S₃ und S₄ bezeichnet sind, bei der Montage des Nutzfahrzeugreifens mit der Felge 1 zumindest teilweise in Kontakt kommen und im montierten Zustand zumindest teilweise in Kontakt sind. Mit dem Segment S₁ steht der Wulstbereich im montierten Zustand mit der Sitzfläche 2a des Felgenhorns 2 in Kontakt. Die Segmente S₂ bis S₄ sind jene, die bei der Montage des Nutzfahrzeugreifens und im montierten Zustand üblicherweise des Nutzfahrzeugreifens teilweise oder vollständig in Kontakt mit der Wulstsitzfläche 3a der Felge 1 sind. Jedes Segment S₁ bis S₄ ist im Wulstquerschnitt eine Gerade, am Wulst des Nutzfahrzeugreifens eine ringförmig umlaufende Fläche. Dabei sind die Segmente S₂, S₃ und S₄ Kegelstumpfmantelflächen, das Segment S₁ entweder eine Kegelstumpfmantelfläche oder eine Mantelfläche eines Kreiszylinders.

In Fig. 1 ist ein Punkt P₂ eingezeichnet, welcher im Wesentlichen mit dem Punkt P₁ der Felge 1 korrespondiert und sich auf dem den Wulstbereich des Reifens umlaufenden Schnittkreis zwischen dem Segment S₁ und dem Segment S₂ befindet. Am Schnittpunkt P₂ schließt das Segment S₁ mit dem Segment S₂ einen Außenwinkel β₁ ein, welcher 190° bis 225° beträgt. In Fig. 1 ist ferner eine in axialer Richtung verlaufende Bezugsgerade g₂ eingezeichnet, welche zum Segment S₂ unter einem Innenwinkel α' von 15° verläuft und im Beispiel durch den Punkt P₂ geht. Insbesondere kann die Bezugsgerade g₂ parallel zur Drehachse des Reifens verlaufen. Entlang eines weiteren, den Wulstbereich des Reifens umlaufenden Schnittkreises, welcher in Fig. 1 durch einen Punkt P₃ gekennzeichnet ist, schließt das Segment S₃ an das Segment S₂ an. Die Segmente S₂ und S₃ schließen miteinander einen stumpfen Außenwinkel β₂ ein, welcher 165° bis 175° beträgt. Ein Punkt P₄ liegt auf einem weiteren, am Übergang des Segmentes S₃ in das Segment S₄ vorliegenden, den Wulstbereich des Reifens umlaufenden Schnittkreis. Die Segmente S₃ und S₄ schließen miteinander einen Außenwinkel β₃ ein, welcher 200° bis 210° beträgt.

Das erste, mit der Sitzfläche 2a des Felgenhornes 2 in Kontakt kommende Segment S₁ reicht von der Bezugsgeraden g₂ aus im rechten Winkel ermittelt bis in eine Höhe h, die zumindest der Felgenhornhöhe entspricht, sodass h üblicherweise ≥ 13,00 mm beträgt.

Auf die Bezugsgerade g₂ in Fig. 1 projiziert verlaufen die Segmente S₂ bis S₄ gemeinsam bzw. in Summe über eine Breite B, die je nach Reifendimension 20,00 mm bis 45,00 mm beträgt. Das Segment S₂ weist eine Breite b₂, das Segment S₃ eine Breite b₃ und das Segment S₄ eine Breite b₄ auf. Die Breite b₂ des Segmentes S₂ beträgt 40 % bis 60 %, insbesondere 45 % bis 55 % der Breite B. Die Breite b₄ des Segmentes S₄ beträgt 20 % bis 35 % der Breite B, die Breite b₃ ist entsprechend auf die Breiten b₂ und b₄ abgestimmt sind.

Der Wulstbereich weist reifeninnenseitig eine insgesamt gerundet verlaufende reifeninnenseitige Wulstkontur auf, die einen Endabschnitt 7 aufweist, welcher gemeinsam mit dem Segment S₄ eine Wulstzehe 6 mit einer Zehenspitze 6a definiert. An der Wulstzehe 6 schließt der Endabschnitt 7 der reifeninnenseitigen Wulstkontur (siehe eingezeichnete Tangente) mit dem Segment S₄ einen Innenwinkel γ ein, welcher 80° bis 90° beträgt. Der Endabschnitt 7 der reifeninnenseitigen Wulstkontur des Wulstbereiches reicht im Wesentlichen bis zur Unter- bzw. Innenkante des Wulstkernes 4. Seitlich des Wulstkernes 4 nimmt der Winkel zwischen Tangenten an die reifeninnenseitige Wulstkontur und dem Segment S₄ kontinuierlich ab, bis dieser Winkel oberhalb des Wulstkernes 4 in der Größenordnung von 35° bis 45° beträgt.

An die Zehenspitze 6a anschließend weist das Segment S₄ einen Endabschnitt 4a auf, welcher eine Breite b₅ von 2,0 mm bis 5,0 mm aufweist und in Richtung zur nicht dargestellten Reifenachse mit einem Radius von 0,5 mm bis 3,0 mm gerundet verläuft. Die Zehenspitze 6a kann zusätzlich schräg angefast sein.

Die Übergänge zwischen den einzelnen Segmenten S₁, S₂, S₃ und S₄ sind als Knicklinien eingezeichnet, können jedoch auch geringfügig gerundet sein, daher beispielsweise mit Übergangsrundungen mit einem kleinen Radius in der Größenordnung von 1,0 mm bis 10,0 mm versehen.

### Bezugsziffernliste

- 1: Felge
- 2: Felgenhorn
- 2a: Sitzfläche
- 3: Felgenabschnitt
- 3a: Wulstsitzfläche
- 4: Wulstkern
- 5: Karkassenlage
- 6: Wulstzehe
- 6a: Zehenspitze
- 7: Endabschnitt
- h: Höhe
- g₁, g₂: Bezugsgerade
- B: Breite
- b₁, b₂, b₃: Breite
- P₁, P₂, P₃,: P₄..Punkt
- S₁, S₂: Segment
- S₃, S₄: Segment
- α, α ': Winkel
- β₁, β₂,: β₃.........Außenwinkel
- γ: Innenwinkel

## Patentansprüche

1. Nutzfahrzeugreifen vorgesehen zur Montage auf einer gemäß E.T.R.T.O. Standards Manual genormten 15°-Tiefbettfelge (Breitencodes 5,25 bis 18,00) mit zwei Felgenhörnern (2) und mit zwei Felgenabschnitten (3) mit je einer Wulstsitzfläche (3a),
wobei der Nutzfahrzeugreifen zwei Wulstbereiche mit Wulstkernen (4) und je einer Wulstzehe (6) und einer reifenaußenseitigen und einer reifeninnenseitigen Wulstkontur aufweist, welche Wulstkonturen an der Wulstzehe (6) aneinander anschließen, wobei jede reifenaußenseitige Wulstkontur ein erstes Segment (S₁), welches bei auf der Felge (1) montiertem Nutzfahrzeugreifen mit dem Felgenhorn (2) in Kontakt ist, und einen Außenkonturbereich, welcher bei auf der Felge (1) montiertem Nutzfahrzeugreifen mit der Wulstsitzfläche (3a) zumindest teilweise in Kontakt ist, aufweist,
wobei sich der Außenkonturbereich aus drei aneinander anschließenden Segmenten (S₂, S₃, S₄) zusammensetzt, und zwar einem an das erste, mit dem Felgenhorn (2) in Kontakt tretenden Segment (S₁) unter einem Außenwinkel (β₁) von 190° bis 225° anschließenden zweiten Segment (S₂), einem an dieses unter einem Außenwinkel (β₂) von 165° bis 175° anschließenden dritten Segment (S₃) und einem an dieses unter einem Außenwinkel (β₃) von 200° bis 210° anschließenden vierten Segment (S₄),
wobei die auf eine unter einem Winkel (α') von 15° zum zweiten Segment (S₂) verlaufende Bezugsgerade (g₂) projizierte Gesamtbreite (B) des zweiten, dritten und vierten Segmentes (S₂, S₃, S₄) 20,0 mm bis 45, 0 mm beträgt und
**dadurch gekennzeichnet, dass**
das vierte Segment (S₄) in dieser Projektion eine Breite (b₄) von 20 % bis 35 % der Gesamtbreite (B) aufweist.

2. Nutzfahrzeugreifen nach Anspruch 1, **dadurch gekennzeichnet, dass** zweite Segment (S₂) eine Breite (b₂) von 40 % bis 60 % der Gesamtbreite (B) aufweist.

3. Nutzfahrzeugreifen nach Anspruch 1 oder 2, **dadurch gekennzeichnet, dass** das zweite, das dritte und das vierte Segment (S₂, S₃, S₄) über den Wulstbereichsumfang betrachtet Kegelstumpfmantelflächen oder Kegelstumpfmantelflächen ähnlich sind.

4. Nutzfahrzeugreifen nach Anspruch 1 oder 2, **dadurch gekennzeichnet, dass** das erste Segment (S₁) über den Wulstbereichsumfang betrachtet entweder eine Kegelstumpfmantelfläche oder eine Zylindermantelfläche oder solchen Mantelflächen ähnlich ist.

5. Nutzfahrzeugreifen nach einem der Ansprüche 1 bis 4, **dadurch gekennzeichnet, dass** die reifeninnenseitige Wulstkontur einen Endabschnitt (7) aufweist, welcher gemeinsam mit dem vierten Segment (S₄) die Wulstzehe (6) mit einer Zehenspitze (6a) definiert, wobei der Endabschnitt (7) an der Zehenspitze (6a) mit dem vierten Segment (S₄) einen Winkel (γ) einschließt, welcher 80° bis 90° beträgt.

6. Nutzfahrzeugreifen nach einem Anspruch 5, **dadurch gekennzeichnet, dass** der Endabschnitt (7) der reifeninnenseitigen Wulstkontur des Wulstbereiches sich im Wesentlichen bis zur Innenkante des Wulstkernes (4) erstreckt.

7. Nutzfahrzeugreifen nach Anspruch 5 oder 6, **dadurch gekennzeichnet, dass** die reifeninnenseitige Wulstkontur außerhalb des Endabschnittes (7) derart verläuft, dass die Winkel zwischen dem vierten Segment (S₄) und Tangenten an die reifeninnenseitige Wulstkontur mit zunehmender Entfernung vom vierten Segment (S₄) kleiner werden.

8. Nutzfahrzeugreifen nach einem der Ansprüche 1 bis 7, **dadurch gekennzeichnet, dass** das vierte Segment (S₄) an der Wulstzehe (6) einen Endabschnitt (4a) aufweist, welcher eine Breite (b₅) von 2,0 mm bis 4,0 mm aufweist und in Richtung zur nicht dargestellten Reifenachse mit einem Radius von 0,5 mm bis 3,0 mm gerundet verläuft.

9. Nutzfahrzeugreifen nach einem der Ansprüche 1 bis 8, **dadurch gekennzeichnet, dass** die einzelnen Segmente (S₁, S₂, S₃ und S₄) über Übergangsrundungen mit einem Radius von beispielsweise 1,0 mm bis 10,0 mm aneinander anschließen.

10. Nutzfahrzeugreifen nach einem der Ansprüche 1 bis 9, **dadurch gekennzeichnet, dass** die Wulstkerne (4) aus gummierten Stahldrähten bestehen.

## Claims

1. Commercial vehicle tyre intended for mounting on an E.T.R.T.O. Standards Manual standardized 15° drop-centre rim (width codes 5.25 to 18.00) with two rim flanges (2) and with two rim sections (3), each with a bead seat surface (3a), wherein the commercial vehicle tyre has two bead regions with bead cores (4) and in each case one bead toe (6) and one bead contour on the outside of the tyre and one on the inside of the tyre, which bead contours adjoin one another at the bead toe (6), wherein each bead contour on the outside of the tyre has a first segment (S₁), which is in contact with the rim flange (2) when the commercial vehicle tyre is mounted on the rim (1), and an outer contour region, which is at least partially in contact with the bead seat surface (3a) when the commercial vehicle tyre is mounted on the rim (1),
wherein
the outer contour region is made up of three adjoining segments (S₂, S₃, S₄), specifically a second segment (S₂) which adjoins the first segment (S₁), which comes into contact with the rim flange (2), at an external angle (β₁) of 190° to 225°, a third segment (S₃) which adjoins this second segment at an external angle (β₂) of 165° to 175°, and a fourth segment (S₄) which adjoins this third segment at an external angle (β₃) of 200° to 210°,
wherein the total width (B) of the second, third and fourth segments (S₂, S₃, S₄), projected onto a reference line (g₂) running at an angle (α') of 15° in relation to the second segment (S₂), is 20.0 mm to 45.0 mm and
**characterized in that**
the fourth segment (S₄) has a width (b₄) of 20% to 35% of the total width (B) in this projection.

2. Commercial vehicle tyre according to Claim 1, **characterized in that** the second segment (S₂) has a width (b₂) of 40% to 60% of the total width (B).

3. Commercial vehicle tyre according to Claim 1 or 2, **characterized in that** the second, the third and the fourth segment (S₂, S₃, S₄), as viewed over the circumference of the bead region, are truncated cone lateral surfaces or similar to truncated cone lateral surfaces.

4. Commercial vehicle tyre according to Claim 1 or 2, **characterized in that** the first segment (S₁), as viewed over the circumference of the bead region, is either a truncated cone lateral surface or a cylinder lateral surface or similar to such lateral surfaces.

5. Commercial vehicle tyre according to one of Claims 1 to 4, **characterized in that** the bead contour on the inside of the tyre has an end section (7) which, together with the fourth segment (S₄), defines the bead toe (6) with a toe tip (6a), wherein the end section (7), at the toe tip (6a), forms an angle (γ), of 80° to 90°, with the fourth segment (S₄).

6. Commercial vehicle tyre according to Claim 5, **characterized in that** the end section (7) of the bead contour, on the inside of the tyre, of the bead region extends substantially as far as the inner edge of the bead core (4).

7. Commercial vehicle tyre according to Claim 5 or 6, **characterized in that** the bead contour on the inside of the tyre runs outside the end section (7) in such a way that the angles between the fourth segment (S₄) and tangents to the bead contour on the inside of the tyre become smaller as the distance from the fourth segment (S₄) increases.

8. Commercial vehicle tyre according to one of Claims 1 to 7, **characterized in that** the fourth segment (S₄), at the bead toe (6), has an end section (4a) which has a width (b₅) of 2.0 mm to 4.0 mm and runs in a rounded manner in the direction of the tyre axis, not shown, with a radius of 0.5 mm to 3.0 mm.

9. Commercial vehicle tyre according to one of Claims 1 to 8, **characterized in that** the individual segments (S₁, S₂, S₃ and S₄) adjoin one another via rounded transitions with a radius of, for example, 1.0 mm to 10.0 mm.

10. Commercial vehicle tyre according to one of Claims 1 to 9, **characterized in that** the bead cores (4) consist of rubberized steel wires.

## Revendications

1. Pneu de véhicule utilitaire prévu pour être monté sur une jante à creux profond à 15° normalisée selon le Standards Manual de l'E.T.R.T.O. (codes de largeur 5,25 à 18,00), avec deux rebords de jante (2) et deux sections de jante (3) avec chacune une surface d'appui de talon (3a),
le pneu de véhicule utilitaire présentant deux zones de talon avec des tringles (4) et chacune un orteil de talon (6) et un contour de talon du côté extérieur du pneu et un contour de talon du côté intérieur du pneu, lesquels contours de talon se raccordent l'un à l'autre au niveau de l'orteil de talon (6), chaque contour de talon du côté extérieur du pneu présentant un premier segment (S₁), qui, lorsque le pneu de véhicule utilitaire est monté sur la jante (1), est en contact avec le rebord de jante (2), et une zone de contour extérieur qui, lorsque le pneu de véhicule utilitaire est monté sur la jante (1), est au moins partiellement en contact avec la surface d'appui de talon (3a),
la zone de contour extérieur se composant de trois segments (S₂, S₃, S₄) se raccordant les uns aux autres, à savoir un deuxième segment (S₂) se raccordant au premier segment (S₁) entrant en contact avec le rebord de jante (2) selon un angle extérieur (β₁) de 190° à 225°, un troisième segment (S₃) se raccordant à celui-ci selon un angle extérieur (β₂) de 165° à 175° et un quatrième segment (S₄) se raccordant à celui-ci selon un angle extérieur (β₃) de 200° à 210°,
la largeur totale (B) des deuxième, troisième et quatrième segments (S₂, S₃, S₄) projetée sur une droite de référence (g₂) s'étendant selon un angle (α') de 15° par rapport au deuxième segment (S₂) étant de 20,0 mm à 45,0 mm, et
**caractérisé en ce que**
le quatrième segment (S₄) présente, dans cette projection, une largeur (b₄) de 20 % à 35 % de la largeur totale (B).

2. Pneu de véhicule utilitaire selon la revendication 1, **caractérisé en ce que** le deuxième segment (S₂) présente une largeur (b₂) de 40 % à 60 % de la largeur totale (B).

3. Pneu de véhicule utilitaire selon la revendication 1 ou 2, **caractérisé en ce que** les deuxième, troisième et quatrième segments (S₂, S₃, S₄), vus sur la circonférence de la zone de talon, sont des surfaces d'enveloppe tronconique ou sont semblables à des surfaces d'enveloppe tronconique.

4. Pneu de véhicule utilitaire selon la revendication 1 ou 2, **caractérisé en ce que** le premier segment (S₁), vu sur la circonférence de la zone de talon, est soit une surface d'enveloppe tronconique, soit une surface d'enveloppe cylindrique, soit est semblable à de telles surfaces d'enveloppe.

5. Pneu de véhicule utilitaire selon l'une quelconque des revendications 1 à 4, **caractérisé en ce que** le contour de talon du côté intérieur du pneumatique présente une section d'extrémité (7) qui, conjointement avec le quatrième segment (S₄), définit l'orteil de talon (6) avec une pointe d'orteil (6a), la section d'extrémité (7) formant, au niveau de la pointe d'orteil (6a), un angle (γ) avec le quatrième segment (S₄) qui est de 80° à 90°.

6. Pneu de véhicule utilitaire selon la revendication 5, **caractérisé en ce que** la section d'extrémité (7) du contour de talon du côté intérieur du pneu de la zone de talon s'étend essentiellement jusqu'au bord intérieur de la tringle de talon (4).

7. Pneu de véhicule utilitaire selon la revendication 5 ou 6, **caractérisé en ce que** le contour de talon du côté intérieur du pneu s'étend à l'extérieur de la section d'extrémité (7) de telle sorte que les angles entre le quatrième segment (S₄) et les tangentes au contour de talon du côté intérieur du pneu diminuent à mesure que l'on s'éloigne du quatrième segment (S₄).

8. Pneu de véhicule utilitaire selon l'une quelconque des revendications 1 à 7, **caractérisé en ce que** le quatrième segment (S₄) présente, au niveau de l'orteil de talon (6), une partie d'extrémité (4a) qui a une largeur (b₅) de 2,0 mm à 4,0 mm et qui s'étend en direction de l'axe du pneumatique non représenté avec un rayon de 0,5 mm à 3,0 mm.

9. Pneu de véhicule utilitaire selon l'une quelconque des revendications 1 à 8, **caractérisé en ce que** les différents segments (S₁, S₂, S₃ et S₄) se raccordent les uns aux autres par des arrondis de transition ayant par exemple un rayon de 1,0 mm à 10,0 mm.

10. Pneu de véhicule utilitaire selon l'une quelconque des revendications 1 à 9, **caractérisé en ce que** les tringles (4) sont constituées de fils d'acier caoutchoutés.
